**Europäisches Patentamt**

**European Patent Office**

**Office européen des brevets**

(19)

(11) Veröffentlichungsnummer : **0 342 309 B1**

(12) **EUROPÄISCHE PATENTSCHRIFT**

(45) Veröffentlichungstag der Patentschrift :
**18.03.92 Patentblatt 92/12**

(51) Int. Cl.⁵ : **F16J 15/32**

(21) Anmeldenummer : **89101224.7**

(22) Anmeldetag : **25.01.89**

(54) **Abdichtung für eine Blaslanze oder eine Welle.**

(30) Priorität : **15.04.88 DE 3812533**

(43) Veröffentlichungstag der Anmeldung :
**23.11.89 Patentblatt 89/47**

(45) Bekanntmachung des Hinweises auf die
Patenterteilung :
**18.03.92 Patentblatt 92/12**

(84) Benannte Vertragsstaaten :
**AT BE CH DE ES FR GB GR IT LI LU NL SE**

(56) Entgegenhaltungen :
**EP-A- 0 263 238**
**CH-A- 448 647**

(56) Entgegenhaltungen :
**DE-A- 2 212 165**
**DE-A- 2 643 769**
**DE-U- 8 308 886**
**DE-U- 8 507 948**
**GB-A- 2 198 195**

(73) Patentinhaber : **Seelen, Josef**
**Mittelstrasse 14**
**W-4232 Xanten 1 (DE)**

(72) Erfinder : **Seelen, Josef**
**Mittelstrasse 14**
**W-4232 Xanten 1 (DE)**

(74) Vertreter : **Cohausz & Florack Patentanwälte**
**Postfach 14 01 61 Schumannstrasse 97**
**W-4000 Düsseldorf 1 (DE)**

EP 0 342 309 B1

EP 0 342 309 B1

## Beschreibung

Die Erfindung betrifft eine Abdichtung für die Welle einer Rauchgasklappe oder die Blaslanze eines Rußbläsers für unter Überdruck stehende Kessel oder Industrieöfen, die bzw. das von mindestens zwei damit umlaufenden koaxialen Dichtringen umgeben ist, die zwischen sich eine als Dichtraum wirkende Ringkammer für die Zufuhr von Sperrluft begrenzen und innen jeweils an der Welle oder der Blaslanze anliegende Metallborsten tragen, die jeweils in mindestens zwei ringförmig nebeneinanderliegenden Gruppen von Bürsten angeordnet sind.

Eine solche Abdichtung für Rußbläser ist aus dem deutschen Gebrauchsmuster DE-U-8308886 bekannt. Diese bekannte Abdichtung zeigt eine hohe Dichtigkeit bei weitgehender Wartungsfreiheit. Dennoch hat es sich in der Praxis gezeigt, daß das im Kessel befindliche Rauchgas durch die Dichtungen hindurch nach außen treten konnte.

Aufgabe der Erfindung ist es, eine Abdichtung der eingangs genannten Art so zu verbessern, daß eine hohe Dichtigkeit erreicht wird.

Die Aufgabe wird erfindungsgemäß dadurch gelöst, daß zwischen den zwei ringförmigen Bürstengruppen jedes Dichtringes ein ringförmiger koaxialer Zwischenraum angeordnet ist, der sich zur Welle oder zur Blaslanze öffnet und mit Sperrluft beaufschlagt ist, und daß zwischen den zwei ringförmigen Bürstengruppen jedes Dichtringes ein ringförmiger koaxialer Zwischenraum angeordnet ist, der sich zur Welle oder zur Blaslanze öffnet und mit Sperrluft beaufschlagt ist und daß der vom Kessel oder Industrieofen weiter entfernt angeordnete Dichtring eine größere Anzahl an Metallborsten aufweist, als der näher am Kessel oder Industrieofen angeordnete Dichtring.

Eine solche Konstruktion führt dazu, daß jeder Dichtring selber einen koaxialen ringförmigen Zwischenraum bildet und damit bei z.B. nur zwei Dichtringen insgesamt drei ringförmige Zwischenräume vorhanden sind, die mit Sperrluft beaufschlagt sind. Dies macht es geradezu unmöglich, daß Rauchgas im Bereich der Blaslanze nach außen dringen kann. Hierbei ist weiterhin Wartungsfreiheit gegeben, und die Konstruktion ist selber von einfacher Art.

Der weit entfernt liegende Dichtring bildet einen größeren Widerstand und damit eine stärkere Abdichtung, so daß die zwischen diesem Dichtring und dem Kessel anliegende Sperrluft eher in den Kessel strömt als nach außen dringt.

Besonders vorteilhaft ist es, wenn zwischen jeweils zwei nebeneinanderliegenden Bürstengruppen ein ringförmiger koaxialer Zwischenraum mit Sperrluft ist. Auch kann der Zwischenraum eine Ringnut sein.

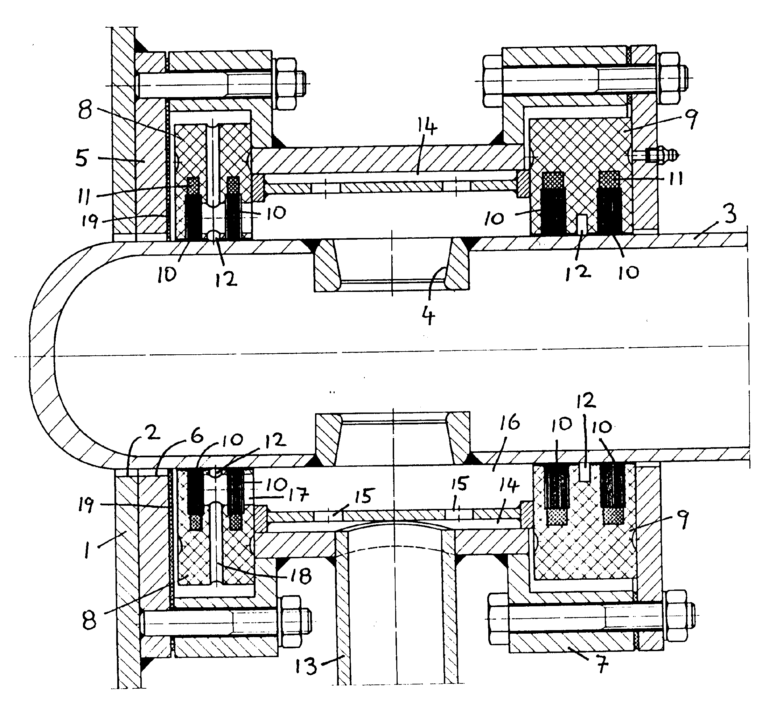

Ein Ausführungsbeispiel der Erfindung ist in der Zeichnung in einem axialen Schnitt dargestellt und wird im folgenden näher beschrieben.

In der Kesselwand 1 eines Industrieofens befindet sich eine kreisrunde Öffnung 2, durch die eine zylindrische Blaslanze 3 von außen steckbar ist, deren Durchmesser nur wenig geringer ist als der der Öffnung 2. Die Blaslanze weist seitlich Öffnungen 4 auf, durch die Heißdampf zur Reinigung des Kessels oder Industrieofens eindrückbar ist, wobei die Blaslanze 3 während des Hineinfahrens um ihre Längsachse gedreht wird.

An der Außenseite der Kesselwand 1 ist um die Öffnung 2 eine Ringplatte 5 koaxial angeschweißt, die eine mit der Öffnung 2 übereinstimmende Öffnung 6 besitzt. An der Ringplatte 5 ist außen ein Gehäuse 7 angeschraubt, in dessen Innerem Dichtmittel für die Blaslanze 3 gelagert sind. Diese Dichtmittel bestehen aus zwei Dichtringen 8, 9, die koaxial die Blaslanze 3 umgeben und im Gehäuse 7 drehbar gelagert sind, so daß sie durch das Drehen der Blaslanze 3 mitgenommen werden.

Am Innenumfang jedes Dichtringes 8, 9 stehen Bürsten vor, die ringförmig angeordnete Bürstengruppen 10 bilden. Die radial nach innen gerichteten Borsten dieser Bürsten sind an ringförmigen Trägern 11 befestigt und liegen mit ihren freien Enden am Außenumfang der Blaslanze 3 auf. Die Träger 11 sind in den Dichtringen 8, 9 eingelassen.

Zwischen den zwei Bürstengruppen 10 jedes Dichtringes 8, 9 befindet sich ein ringförmiger koaxialer Zwischenraum 12, der sich zur Blaslanzenoberfläche hin öffnet und mit Sperrluft beaufschlagt ist. Diese Sperrluft wird durch einen Rohrstutzen 13 zugeführt, der außen am Gehäuse zwischen den beiden Dichtringen 8, 9 befestigt ist. Von dem Stutzen 13 gelangt die Sperrluft in eine äußere Ringkammer 14 und von dieser über Öffnungen 15 in eine innere Ringkammer 16, die als Dichtraum wirkt. Diese Ringkammer 16 wird seitlich durch die Dichtringe 8, 9 begrenzt, die seitliche Durchtrittsöffnungen 17 bzw. Verbindungsbohrungen besitzen, die zu den ringförmigen Zwischenräumen 12 führen und diese mit Sperrluft versorgen.

Von den Öffnungen 17 führen radial nach außen Bohrungen 18, die die Außenseiten der Dichtringe 8, 9 beaufschlagen.

Zwischen dem Dichtring 8 und der Ringplatte 5 ist eine vordere Abdichtungsscheibe 19 befestigt, die mit ihrer Öffnung an der Außenseite der Blaslanze 3 als weitere Dichtung anliegt. Der von der Kesselwand 1 weiter entfernt liegende Dichtring 9 ist breiter ausgeführt und weist breitere und dichtere Bürstenringe 10 auf, so daß

2

hier eine stärkere Abdichtung erreicht wird als beim Dichtring 8 und damit ein größerer Luftwiderstand.

Durch diese Vorrichtung kann nicht nur eine Blaslanze sondern auch eine Welle, insbesondere die einer Rauchgasklappe in gleicher Weise abgedichtet werden.

**Patentansprüche**

1. Abdichtung für die Welle einer Rauchgasklappe oder die Blaslanze (3) eines Rußbläsers für unter Überdruck stehende Kessel oder Industrieöfen die von mindestens zwei damit umlaufenden koaxialen Dichtringen (8,9) umgeben ist, die zwischen sich eine als Dichtraum wirkende Ringkammer (16) für die Zufuhr von Sperrluft begrenzen und innen jeweils an der Welle oder der Blaslanze (3) anliegende Metallborsten tragen, die jeweils in mindestens zwei ringförmig nebeneinanderliegenden Gruppen (10) von Bürsten angeordnet sind, **dadurch gekennzeichnet** , daß zwischen den zwei ringförmigen Bürstengruppen (10) jedes Dichtringes (8, 9) ein ringförmiger koaxialer Zwischenraum (12) angeordnet ist, der sich zur Welle oder zur Blaslanze (3) öffnet und mit Sperrluft beaufschlagt ist und daß der vom Kessel oder Industrieofen weiter entfernt angeordnete Dichtring (9) eine größere Anzahl an Metallborsten aufweist, als der näher am Kessel oder Industrieofen angeordnete Dichtring (8).

2. Abdichtung nach Anspruch 1, **dadurch gekennzeichnet** , daß der Zwischenraum (12) eine Ringnut ist.

**Claims**

1. A seal for the shaft of a flue gas flap or the blowing lance (3) of a soot blower for boilers or industrial furnaces under excess pressure, which is enclosed by at least two coaxial sealing rings (8, 9) which corotate therewith and bound between themselves an annular chamber (16) acting as a sealing space for the supply of barrier air and which each bear metal bristles bearing against the shaft or the blowing lance (3) and each disposed in at least two groups (10) of brushes disposed in a ring one beside the other, characterized in that disposed between the two annular groups (10) of brushes of each sealing ring (8, 9) is an annular coaxial intermediate space (12) open in the direction of the shaft or the blowing lance (3) and acted upon by barrier air, and the sealing ring (9) disposed furthest away from the boiler or industrial furnace has a larger number of metal bristles than the sealing ring (8) disposed closer to the boiler or industrial furnace.

2. A seal according to claim 1, characterized in that the intermediate space (12) is an annular groove.

**Revendications**

1. Etanchement pour l'arbre d'un registre de gaz de fumée ou d'une lance à vent (3) d'un souffleur de suie pour une chaudière restant en surpression ou des fours industriels qui est entouré par au moins deux bagues d'étanchéité (8, 9) coaxiales tournant avec, qui limitent entre elles une chambre annulaire (16) agissant comme espace d'étanchéité pour l'amenée d'air d'arrêt et portent respectivement des crins métalliques en appui sur l'arbre ou la lance à vent (3), qui sont disposés respectivement en au moins deux groupes (10) annulaires adjacents de brosses. caractérisé en ce qu'un espace intermédiaire (12) coaxial annulaire est disposé entre les deux groupes annulaires de brosses (10) de chaque bague d'étanchéité (8, 9) qui s'ouvre vers l'arbre ou vers la lance à vent (3), et est frappé par de l'air d'arrêt, et que la bague d'étanchéité (9) disposée plus éloignée de la chaudière ou du four industriel présente un plus grand nombre de crins métalliques que la bague annulaire (8) disposée plus proche de la chaudière ou du four industriel.

2. Etanchement selon la revendication 1, caractérisé en ce que l'espace intermédiaire (12) est une rainure annulaire.